Europäisches Patentamt

European Patent Office

Office européen des brevets

(11) Veröffentlichungsnummer: **0 465 894 A2**

## EUROPÄISCHE PATENTANMELDUNG

(21) Anmeldenummer: **91110236.6**

(22) Anmeldetag: **21.06.91**

(51) Int. Cl.5: **B23Q 11/04**, B23B 47/32

(30) Priorität: **07.07.90 DE 9010313 U**

(43) Veröffentlichungstag der Anmeldung:
**15.01.92 Patentblatt 92/03**

(84) Benannte Vertragsstaaten:
**CH DE FR GB IT LI NL SE**

(71) Anmelder: **C. & E. FEIN GmbH & Co.**
**Leuschnerstrasse 41-47**
**W-7000 Stuttgart 1(DE)**

(72) Erfinder: **Die Erfinder haben auf ihre**
**Nennung verzichtet**

(74) Vertreter: **Witte, Alexander, Dr.-Ing. et al**
**Augustenstrasse 7**
**W-7000 Stuttgart 1(DE)**

(54) **Bohreinrichtung.**

(57) Eine Bohreinrichtung weist einen Bohrwerkzeugantrieb (17) auf, der über einen Vorschubantrieb (21)
in Vorschubrichtung verschiebbar ist. Der Vorschubantrieb (21) ist über eine Überlastabschalteinrichtung
(106, 108) abschaltbar, wobei eine Abschaltung entweder bei Überschreiten einer vorgehbaren Gegenkraft entgegengesetzt zur Vorschubrichtung oder bei
Erreichen eines Grenzlastzustandes des Bohrwerkzeugantriebes (17) erfolgt, während der Bohrwerkzeugantrieb (17) weiterläuft.

FIG. 2

Die Erfindung betrifft eine Bohreinrichtung mit einer in einer Vorschubeinrichtung verschieblich gelagerten Halterung für einen ein Bohrwerkzeug antreibenden Bohrwerkzeugantrieb, mit einer Vorschubeinrichtung, umfassend einen Vorschubantrieb zum Verschieben der Halterung, und mit einer Überlastabschalteinrichtung, umfassend einen eine Kraft auf das Bohrwerkzeug entgegengesetzt zur Vorschubrichtung messenden Sensor, wobei die Überlastabschalteinrichtung bei Überschreiten einer vorgebbaren Gegenkraft auf das Bohrwerkzeug entgegengesetzt zur Vorschubrichtung eine Abschaltung des Vorschubantriebs durchführt.

Eine derartige Bohreinrichtung ist beispielsweise aus der EP-A-0 337 381 bekannt. Diese Vorrichtung ist in der Lage, auf das Überschreiten der Gegenkraft entgegengesetzt zur Vorschubrichtung zu reagieren und den Bohrwerkzeugantrieb zum Schutz gegen eine Überlastung abzuschalten.

Aus der DE-OS 32 29 306 ist ferner eine Bohreinrichtung bekannt, bei welcher eine Überlastabschaltung dann vorgenommen wird, wenn der vom Bohrwerkzeugantrieb angeforderte Strom einen vorgegebenen Wert übersteigt, wobei bei automatischem Vorschubantrieb bei Überschreiten einer ersten Stromschwelle der automatische Vorschubantrieb abgeschaltet und bei Übersteigen einer zweiten Stromschwelle der Strom des Bohrwerkzeugantriebs zusätzlich abgeschaltet werden.

Der Erfindung liegt ausgehend von einer Bohreinrichtung gemäß der EP-A-0 337 381 die Aufgabe zugrunde, eine Bohreinrichtung zu schaffen, die in der Lage ist, auf alle auftretenden Überlastzustände differenziert zu reagieren, und möglichst den Bohrvorgang fortzusetzen.

Diese Aufgabe wird bei einer Bohreinrichtung der eingangs beschriebenen Art erfindungsgemäß dadurch gelöst, daß eine Meßeinrichtung für einen Lastzustand des Bohrwerkzeugantriebs vorgesehen ist und daß die Überlastabschalteinrichtung so ausgebildet ist, daß sie entweder bei Übersteigen der vorgebbaren Gegenkraft entgegengesetzt zur Vorschubrichtung oder bei Erreichen eines Grenzlastzustandes des Bohrwerkzeugantriebs den Vorschubantrieb abschaltet, jedoch den Bohrwerkzeugantrieb weiterlaufen läßt.

Der Vorteil der erfindungsgemäßen Lösung ist somit darin zu sehen, daß diese in der Lage ist, differenziert auf die unterschiedlichsten zu Überlastzuständen führenden Gegenkräfte jeweils unter Abschaltung des Vorschubantriebs einzugehen, jedoch stets den Bohrwerkzeugantrieb weiterlaufen läßt, damit dieser dem Bohrwerkzeug die Möglichkeit gibt, sich freizuschaffen.

Bei der Art der Messung der auf das Bohrwerkzeug wirkenden Gegenkraft entgegengesetzt zur Vorschubrichtung sind die unterschiedlichsten Möglichkeiten denkbar. Im Prinzip kann an jeder Verbindungsstelle zwischen dem Bohrwerkzeug und dem Fuß ein die Kraft messender Kraftsensor vorgesehen sein. Besonders vorteilhaft ist es jedoch, wenn die Überlastabschalteinrichtung eine eine Ausweichbewegung des Bohrwerkzeugs entgegengesetzt zur Vorschubrichtung erlaubende Auslöseeinrichtung für den Sensor aufweist. Diese Art der Ausbildung der Überlastabschalteinrichtung erlaubt nicht nur in relativ einfacher Weise, die Kraft entgegengesetzt zur Vorschubrichtung zu messen sondern gibt dem Bohrwerkzeug auch eine gewisse Beweglichkeit entgegengesetzt zur Vorschubrichtung, um sich nach Stillsetzen des Vorschubantriebs freizuschaffen.

Im einfachsten Fall ist die Auslöseeinrichtung so aufgebaut, daß sie eine Verschiebeführung und ein gegenüber dieser bewegliches Verschiebeelement umfaßt, so daß die Auslöseeinrichtung an irgend einer Verbindungsstelle zwischen dem Bohrwerkzeug und dem Fuß angeordnet werden kann, wobei vorzugsweise die Verschieberichtung eine Komponente parallel zur Vorschubrichtung hat.

Besonders günstig ist es, wenn die Verschiebeführung eine Längsführung und das Verschiebeelement ein längs dieser bewegliches Gleitelement ist. Mit dieser Längsführung wird eine exakte Führung gewährleistet und die Ausweichbewegung des Bohrwerkzeugs auf eine definierte Richtung, vorzugsweise eine Richtung parallel zur Vorschubrichtung, begrenzt.

Um dem Bohrwerkzeug bei seiner Ausweichbewegung die erforderliche Beweglichkeit zu verschaffen, jedoch stets eine Kraft in Vorschubrichtung aufrechtzuerhalten, ist vorgesehen, daß die Auslöseeinrichtung der Ausweichbewegung des Bohrwerkzeugs entgegengesetzt zur Vorschubrichtung mit einem elastischen Kraftspeicher entgegenwirkt.

Besonders vorteilhaft ist es dabei, wenn der elastische Kraftspeicher zur Einstellung der vorgebbaren Gegenkraft justierbar ist, da dann die Möglichkeit besteht, je nach Bohraufgabe die Gegenkraft einzustellen.

Ferner ist es, um die Verschiebewege nicht allzu groß zu gestalten, zweckmäßig, wenn der elastische Kraftspeicher vorspannbar ist.

Besonders vorteilhaft ist eine Lösung, bei welcher der elastische Kraftspeicher einen kraftbeaufschlagten Verschiebeweg der Auslöseeinrichtung zuläßt. Durch diesen kraftbeaufschlagten Verschiebeweg kann nach einem Stillsetzen des Vorschubantriebs dem Bohrwerkzeug die Möglichkeit gegeben werden, sich selbst freizuarbeiten, wobei nach wie vor das Bohrwerkzeug mit der am Kraftspeicher eingestellten Kraft beaufschlagt ist.

Hinsichtlich des Sensors wurden bislang keine näheren Angaben gemacht. So ist es zweckmäßig, wenn der Sensor ein Wegsensor ist, welcher einen Verschiebeweg der Auslöseeinrichtung erfaßt.

Besonders zweckmäßig ist es dabei, wenn der Sensor ein mehrstufiger Sensor ist, welcher mehrere unterschiedlich große Verschiebewege getrennt erfassen kann.

Im einfachsten Fall ist vorgesehen, daß der Sensor eine erste Schaltstufe und eine auf diese folgend angeordnete zweite Schaltstufe aufweist, so daß mit dem Sensor insgesamt drei Stellungen erfaßt werden können, nämlich als erste Stellung eine, bei welcher beide Schaltstufen betätigt sind, als zweite eine, bei welcher die erste Schaltstufe nicht, die zweite Schaltstufe jedoch betätigt ist und als dritte Stellung eine, bei welcher beide Schaltstufen nicht betätigt sind.

Bei einem besonders zweckmäßigen Ausführungsbeispiel ist vorgesehen, daß die Überlastabschalteinrichtung bei Erreichen der ersten Schaltstufe ein Warnsignal abgibt. Mit diesem Warnsignal besteht die Möglichkeit, eine Bedienungsperson darauf aufmerksam zu machen, daß die auf das Bohrwerkzeug entgegengesetzt zur Vorschubrichtung wirkende Gegenkraft nahe der vorgegebenen Gegenkraft ist und somit bei weiterer Erhöhung der Gegenkraft eine Abschaltung des Vorschubantriebs erfolgen wird.

Dieses Warnsignal kann auf mehrere Art und Weise gegeben werden. Beispielsweise ist es möglich, daß das Warnsignal ein optisches Warnsignal ist. Es ist aber auch denkbar, daß das Warnsignal ein akustisches Warnsignal ist.

Ferner ist bei einem bevorzugten Ausführungsbeispiel zweckmäßigerweise vorgesehen, daß die Überlastabschalteinrichtung bei Erreichen der zweiten Schaltstufe die Abschaltung des Vorschubantriebs durchführt, wobei der elastische Kraftspeicher dann so justiert ist, daß bei Erreichen der zweiten Schaltstufe die vorgegebene Gegenkraft überschritten ist.

Bei einem bislang beschriebenen Ausführungsbeispiel wurde nicht näher auf die Art der Ausbildung der Meßeinrichtung für den Lastzustand des Bohrwerkzeugantriebs eingegangen.

Auch diese Messung, die eine Messung des auf das Bohrwerkzeug wirkenden Gegendrehmoments darstellt, kann auf unterschiedlichste Art und Weise durchgeführt werden. Beispielsweise wäre es möglich, das von dem Bohrwerkzeugantrieb auf den Halter ausgeübte Gegendrehmoment durch Kraftsensoren zu erfassen. Besonders einfach ist es jedoch, wenn die Meßeinrichtung für den Lastzustand des Bohrwerkzeugantriebs dessen Stromaufnahme erfaßt, da damit eine unmittelbar für die Beschädigung des Bohrwerkzeugantriebs relevante Größe direkt gemessen wird.

Hierbei ist zweckmäßigerweise vorgesehen, daß die Überlastabschalteinrichtung das Überschreiten eines ersten vorgebbaren Grenzstroms als Grenzlastzustand wertet und den Vorschubantrieb abschaltet, wobei insbesondere vorgesehen ist, daß trotz des abgeschalteten Vorschubantriebs der Bohrwerkzeugantrieb weiterarbeitet, um das Bohrwerkzeug wieder freizuarbeiten.

Um beim Weiterarbeiten des Bohrwerkzeugantriebs zu vermeiden, daß dieser ständig noch mehr Strom aufnimmt und letztendlich beschädigt wird, ist es vorgesehen, daß die Überlastabschalteinrichtung eine Stromregelung für den Bohrwerkzeugantrieb umfaßt und dessen Strom auf einen zweiten, über dem ersten Grenzstrom liegenden Wert mit der Stromregelung begrenzt. Damit ist der zweite Grenzstrom als zulässiges Maximum für den Bohrwerkzeugantrieb festgelegt, das keinesfalls überschritten wird. Im Gegensatz zu den aus dem Stand der Technik bekannten Lösungen wird jedoch bei Erreichen des absoluten Maximums nicht der Bohrwerkzeugantrieb ebenfalls stillgesetzt, sondern es wird lediglich der Strom begrenzt, so daß eine erneute Möglichkeit für das Bohrwerkzeug geschaffen wird, sich freizuarbeiten, ohne daß eine Beschädigung des Bohrwerkzeugantriebs möglich ist.

Um den Benutzer auch bei Erreichen des ersten Grenzstromes bereits zu warnen, ist vorgesehen, daß die Überlastabschalteinrichtung bei Überschreiten des ersten Grenzstroms ein Warnsignal abgibt.

Das Warnsignal kann ebenfalls ein akustisches oder ein optisches Warnsignal sein, wobei ein optisches Warnsignal bevorzugt wird.

Rein prinzipiell wäre es bei der erfindungsgemäßen Bohreinrichtung möglich, die Abschaltung so zu gestalten, daß nach Überschreiten der vorgebbaren Gegenkraft oder Überschreiten des Grenzlastzustandes eine Abschaltung des Vorschubantriebs erfolgt, die erst nach einem manuellen Wiedereinschalten durch die Bedienungsperson aufgehoben werden kann.

Dies ist bei all den Bohreinrichtungen erforderlich, bei denen keine differenzierte Erfassung sämtlicher Überlastzustände durchgeführt wird. Bei der erfindungsgemäßen Lösung ist es jedoch besonders vorteilhaft, daß die Abschaltung des Vorschubantriebs nach Unterschreiten der vorgebbaren Gegenkraft oder Unterschreiten des Grenzlastzustandes selbsttätig aufgehoben und der Vorschubantrieb wieder eingeschaltet wird. Damit bietet die erfindungsgemäße Bohreinrichtung die Möglichkeit, ohne Eingriff einer Bedienungsperson nach Beseitigen des Überlastzustandes wieder weiterzuarbeiten, was dadurch ohne das Risiko der Beschädigung von Teilen der Bohreinrichtung möglich ist, daß differenziert sowohl die Gegenkraft als auch das Gegendrehmoment erfaßt wird.

Ferner ist es besonders vorteilhaft, wenn der elastische Kraftspeicher so einstellbar ist, daß die vorgebbare Gegenkraft erst nach Durchlaufen eines Verschiebewegs überschritten wird, da der Verschiebeweg des elastischen Kraftspeichers dann dazu benutzt werden kann, um das Bohrwerkzeug unter Beaufschlagung der Kraft des Kraftspeichers nach Stillsetzen des Vorschubantriebs weiterarbeiten zu lassen, so lange, bis die vorgebbare Gegenkraft wieder unterschritten ist und erneut ein Vorschub durch den Vorschubantrieb erfolgt.

Dadurch wird die Möglichkeit geschaffen, daß mit ständigem An- und Abschalten des Vorschubantriebs das Bohrwerkzeug ständig durch den Kraftspeicher beaufschlagt weiterarbeitet und somit durch ein schrittweises Bewegen des Halters mittels des Vorschubantriebs in Vorschubrichtung die Bohrung durch ständig erneutes Abarbeiten des Verschiebewegs durchgeführt wird.

Um auch noch die Bohrtiefe definiert einstellen zu können, ist vorteilhafterweise vorgesehen, daß die Vorschubeinrichtung mit einer Bohrtiefenabschaltung versehen ist, welche bei Erreichen einer vorgebbaren Bohrtiefe den Vorschubantrieb abschaltet.

Besonders zweckmäßig ist es dabei, wenn die Bohrtiefenabschaltung getrennt von der Auslöseeinrichtung angeordnet ist, um unabhängig von der Auslöseeinrichtung die Bohrtiefenabschaltung vorzunehmen.

Zweckmäßigerweise ist dabei vorgesehen, daß die Bohrtiefenabschaltung an dem Vorschubantrieb angeordnet ist.

Weitere Merkmale und Vorteile der Erfindung sind Gegenstand der nachfolgenden Beschreibung sowie der zeichnerischen Darstellung einiger Ausführungsbeispiele. In der Zeichnung zeigen:

Fig. 1    eine teilweise aufgebrochene, schematisierte Ansicht einer erfindungsgemäßen Bohreinrichtung;

Fig. 2    eine Schnittansicht längs Linie 2-2 in Fig. 1 und

Fig. 3    ein Blockschaltbild eines Ausführungsbeispiels einer Überlastabschalteinrichtung.

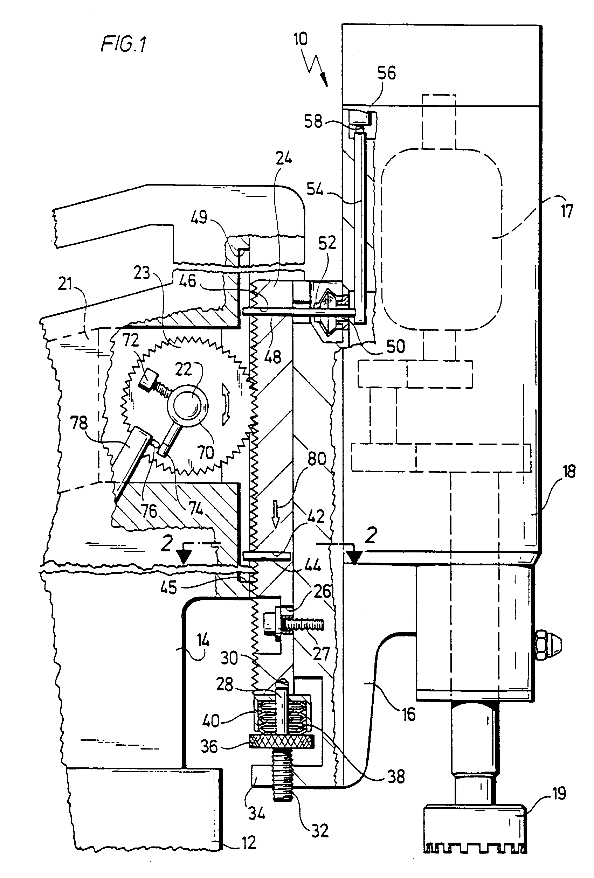

Fig. 1 zeigt eine im Ganzen mit dem Bezugszeichen 10 bezeichnete Bohreinrichtung, die über einen Magnetfuß 12 an einem nicht gezeigten Gegenstand festgelegt ist.

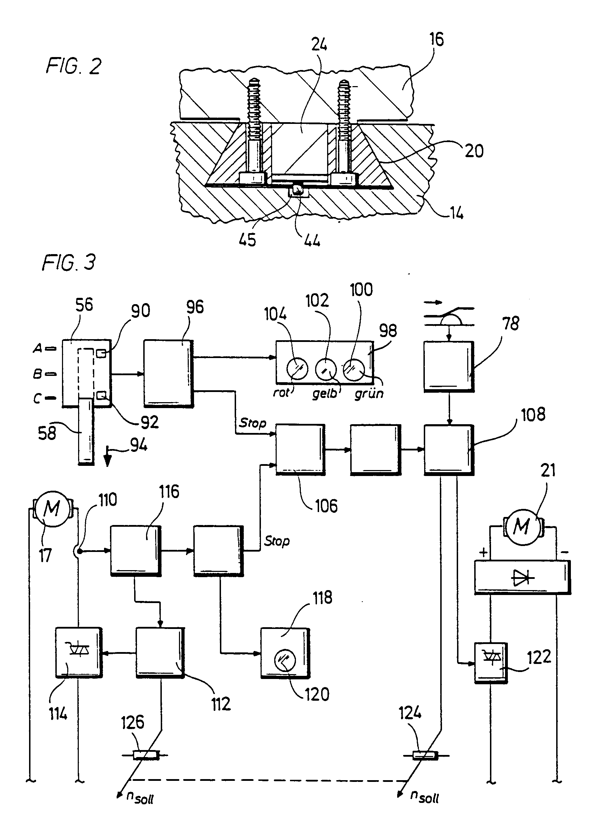

Auf dem Magnetfuß 12 ist eine Führung 14 der Bohreinrichtung 10 montiert, in der eine Halterung 16 für eine Bohrwerkzeugmaschine 18 über eine Schwalbenschwanzführung 20 gehalten ist (Fig. 2). In der einen Bohrwerkzeugantrieb 17 aufweisenden Bohrwerkzeugmaschine 18 ist als Bohrwerkzeug ein Bohrer mit einer Bohrkrone 19 montiert.

Die Führung 14 lagert außerdem eine antreibbare Antriebswelle 22 mit einem darauf drehfest sitzenden Antriebsritzel 23. Die Antriebswelle 22 wird von einem Vorschubantrieb 21 über ein Getriebe angetrieben und arbeitet über das Antriebsritzel 23 auf eine Zahnstange 24, die an der Halterung 16 so gehalten ist, daß sie eine Relativbewegung gegenüber der Halterung 16 ausführen kann.

Dies wird dadurch erreicht, daß die Zahnstange 24 zum einen ein Langloch 26 aufweist, durch welches eine Schraube 27 durchgreift, die mit der Halterung 16 verschraubt ist. Am unteren Ende ist die Zahnstange 24 von einem Führungsbolzen 28 gehalten, der mit einem Ende in ein entsprechendes Sackloch 30 der Zahnstange 24 eingreift. An seinem anderen Ende weist der Führungsbolzen 28 ein Außengewinde 32 auf, das in einen Halteflansch 34 der Halterung 16 eingeschraubt ist. In Längsrichtung benachbart zum Außengewinde 32 ist an den Führungsbolzen 28 ein Rändelrad 36 angeformt, mit dem sich der Führungsbolzen 28 mehr oder weniger weit in den Flansch 34 eindrehen läßt. Das Rändelrad 36 dient gleichzeitig zum Abstützen eines Tellerfederpakets 38, das auf den Führungsbolzen 28 von seinem in das Sackloch 30 eingreifenden Ende her aufgeschoben ist. Zwischen dem Tellerfederpaket 38 und der Zahnstange 24 ist noch eine Führungshülse 40 auf den Führungsbolzen 28 aufgeschoben, die einen Teil des Tellerfederpakets 38 übergreift.

Am unteren Ende der Zahnstange 24 ist in eine Bohrung 42 ein Anschlagstift 44 eingesetzt, der mit seinem einen Ende über die Zähne der Zahnstange 24 hinaussteht und zusammen mit einer an der Führung 14 angeordneten Anschlagfläche 45 eine Begrenzung für den Vorschubweg der Halterung 16 gegenüber der Führung 14 nach unten definiert.

Am oberen Ende der Zahnstange ist eine weitere Bohrung 46 vorgesehen, in die ein oberer Anschlagstift 48 eingesetzt ist, der mit einem Ende ebenfalls über die Zähne der Zahnstange 24 hinaussteht und nach oben hin zusammen mit einer an der Führung 14 angeordneten Anschlagfläche 49 eine Begrenzung für die Verschiebebewegung der Halterung 16 gegenüber der Führung 14 definiert und damit auch den höchsten mit der Bohrwerkzeugmaschine 18 zu erreichenden Punkt festlegt.

Anstelle der Anschlagflächen 45 und 49 wäre es aber auch möglich, eine Begrenzung der Vorschubbewegung der Halterung 16 dadurch zu erreichen, daß die Anschlagstifte 44 und 48 gegen das Antriebsritzel 23 laufen.

Mit seinem entgegengesetzten Ende ragt der obere Anschlagstift 48 nach hinten aus der Zahnstange 24 heraus in einen Hohlraum 50 in der Halterung 16. Dieser Hohlraum 50 ist über eine Dichtung 52, durch die der Anschlagstift 48 hindurchgreift, gegenüber der Zahnstange 24 abgedichtet. Der obere Anschlagstift trägt einen Bolzen 54 in einer parallel zur Zahnstange 24 verlaufenden Bohrung, der mit einem Ende in Kontakt mit einem Betätigungselement 58 eines Schalters 56 ist.

Der Hohlraum 50 ist hierbei so ausgebildet, daß er im wesentlichen aus zwei senkrecht zueinander verlaufenden Bohrungen besteht, wobei die eine das Austreten des Anschlagstifts 48 aus der Zahnstange 24 erlaubt und die andere Bohrung im wesentlichen den Bolzen 54 aufnimmt und führt.

Im normalen Betriebszustand nimmt die Zahnstange 24 zu der Halterung 16 die in der Fig. 1 gezeigte relative Position ein. Hierbei drückt das Tellerfederpaket 38, das sich auf den Rändelrad 36 des Führungsbolzens 28 abstützt, die Zahnstange 24 nach oben, so daß die Schraube 27 am unteren Ende des Langlochs 26 anliegt.

Bei einer weiteren Abwärtsbewegung, bei der die Bohrkrone 19 auf einen zu großen Widerstand trifft, verschiebt sich die Halterung 16 gegenüber der Zahnstange 24 relativ nach oben, so lange, bis die Schraube 27 am oberen Ende des Langlochs 26 zum Anliegen kommt. Gleichzeitig verschiebt sich der obere Anschlagstift 48 in dem Hohlraum 50 nach unten, wobei das Material der Dichtung 52 im unteren Bereich zusammengepreßt wird. Der Bolzen 54, der von dem oberen Anschlagstift 48 getragen wird, verschiebt sich gleichzeitig innerhalb der senkrechten Bohrung des Hohlraums 50 nach unten und gibt das Betätigungselement 58 des Schalters 56 frei. Dies führt zu einem Wechsel des Schaltzustands des Schalters 56.

Zur Festlegung einer maximalen Bohrtiefe der Bohreinrichtung ist auf der Antriebswelle 22 ein Stellring 70 vorgesehen, welcher gegenüber der Welle 22 verdrehbar und mittels einer Stellschraube 72 in verschiedenen Stellungen drehfest festlegbar ist. Dieser Stellring trägt einen Anschlagnocken 74, welcher in der in Fig. 1 gezeichneten Stellung ein Betätigungselement 76 eines Bohrtiefenabschalters 78 beaufschlagt, so daß der Bohrtiefenabschalter, wie später noch im einzelnen beschrieben, den Vorschubantrieb 21 abschaltet.

Die erfindungsgemäße Bohrtiefenabschaltung arbeitet nach dem Prinzip, daß das Antriebsritzel 23 in der Regel so ausgelegt ist, daß weniger als eine Umdrehung den maximalen Vorschubweg in Vorschubrichtung 80 bewirkt, so daß maximal nicht ganz eine Umdrehung des Antriebsritzels 23 den maximalen Vorschubweg bewirkt. Somit kann in der nach oben gefahrenen Stellung der Halterung 16 der Anschlagnocken 74 auf der dem Betätigungselement 76 gegenüberliegenden Seite des Bohrtiefenabschalters 78 stehen. Ist eine geringere Bohrtiefe erwünscht, so wird der Stellring auf der Antriebswelle 22 so weit verdreht und festgelegt, daß schon nach einem geringeren Vorschubweg das Betätigungselement 76 des Bohrtiefenabschalters 78 betätigt wird.

Die Steuerung der erfindungsgemäßen Bohreinrichtung umfaßt, wie in dem Blockdiagramm in Fig. 3 dargestellt, den Schalter 56, welcher zwei Schaltkontakte 90 und 92 aufweist, die je nach Verschiebung des Betätigungsglieds 58 in Verschieberichtung 94 nacheinander betätigbar sind, so daß der Schalter 56 in der Lage ist, drei unterschiedliche Verschiebestellungen des Halters 16 relativ zur Zahnstange 24 festzustellen und einer Auswerteeinrichtung 96 zu melden.

Die erste Stellung A des Betätigungselements 58 liegt dann vor, wenn die von der als Bohrwerkzeug dienenden Bohrkrone 19 auf den Halter ausgeübte Kraft entgegengesetzt zur Vorschubrichtung 80 so gering ist, daß keine Relativverschiebung des Halters 16 gegenüber der Zahnstange 24 und somit keine Ausweichbewegung des Halters 16 entgegengesetzt zur Vorschubrichtung 80 erfolgt.

Steigt jedoch die von der Bohrkrone 19 auf den Halter ausgeübte Gegenkraft bei weiterer Drehung des Antriebsritzels 23 und somit weiterem Vorschub des Halters 16 in Vorschubrichtung 80 an, so daß das Tellerfederpaket 38 zusammengedrückt wird, so erfolgt zunächst eine geringfügige Verschiebung des Halters 16 relativ zur Zahnstange 24 entgegengesetzt zur Vorschubrichtung 80, was dazu führt, daß das Betätigungselement 58 in Verschieberichtung 94, d.h. in der Vorschubrichtung 80, aus dem Schalter 56 herausgezogen wird und die zweite Stellung B erreicht. In dieser Stellung B ist der erste Schaltkontakt 90 nicht mehr betätigt, jedoch der Schaltkontakt 92 nach wie vor betätigt. Diese Stellung B gilt als gerade noch erlaubter Zustand der Bohrkraft.

Nimmt die von der Bohrkrone 19 auf den Halter 16 ausgeübte Gegenkraft weiter zu, so führt dies zu einem weiteren Zusammendrücken des Tellerfederpakets 38 entgegengesetzt zur Vorschubrichtung 80 und somit zu einer weiteren Verschiebung des Betätigungselements 58 in Vorschubrichtung 80, so daß auch der zweite Schaltkontakt 92 nicht mehr betätigt ist und das Betätigungselement 58 die dritte Stellung C erreicht. Die Stellung C gilt als der nicht mehr erlaubte Bereich der Bohrkraft.

Um das Eintreten der Stellung C entsprechend den jeweiligen Verhältnissen justieren zu können, ist die Vorspannung des Tellerfederpakets 38 durch die Rändelschraube 36 und das Gewinde 32 einstellbar.

Alle Stellungen A, B, und C des Betätigungselements 58 werden vom Schalter 56 der Auswerteschaltung 96 übermittelt, die außerdem eine Anzeigeeinheit 98 mit insgesamt drei Leuchtdioden 100, 102 und 104 ansteuert. Dabei ist die Leuchtdiode 100 grün und zeigt die Stellung A an, die Leuchtdiode 102 gelb und zeigt die Stellung B an und die Leuchtdiode 104 rot und zeigt die Stellung C an.

Mit diesen Leuchtdioden 100 bis 104 kann eine Bedienungsperson der erfindungsgemäßen Bohreinrichtung erkennen, in welchem Arbeitszustand die erfindungsgemäße Bohreinrichtung arbeitet, insbesondere welche Gegenkraft von der Bohrkrone 19 auf den Halter 16 ausgeübt wird.

Ferner gibt die Auswerteschaltung 96 ein Stopsignal an ein nichtausschließliches Oder-Glied 106 weiter, das eine Vorschubabschaltung 108 ansteuert, wie später im einzelnen beschrieben.

Ferner erfaßt die erfindungsgemäße Überlastabschalteinrichtung einen Stromsensor 110, welcher den von dem Bohrwerkzeugantrieb 17 benötigten Strom ständig mißt. Dieser Strom wird gesteuert durch einen Bohrregler 112, welcher auf einem Triac 114 im Stromkreis des Bohrwerkzeugantriebs 17 wirkt.

Der Bohrregler 112 wird seinerseits wieder angesteuert durch eine Stromauswerteschaltung 116, die mit dem Stromsensor 110 in Verbindung steht.

Die Stromauswerteschaltung 116 arbeitet dabei so, daß sie ab dem Überschreiten eines ersten, durch den Bohrwerkzeugantrieb 21 fließenden Grenzstrom ein Stopsignal an das Oder-Glied 106 weitergibt und gleichzeitig die Stromauswerteschaltung eine Stromanzeige 118 mit einer LED 120 ansteuert, die dem Betreiber der erfindungsgemäßen Bohreinrichtung mitteilt, daß er nunmehr oberhalb des ersten Grenzstroms arbeitet.

Ferner detektiert die Stromauswerteschaltung 116 noch einen zweiten Grenzstrom, welcher oberhalb des ersten Grenzstroms liegt, und ab dessen Erreichen über den Bohrregler 112 und den Triac 114 den Strom auf dem zweiten Grenzstrom begrenzt, so daß eine Drehzahlreduktion des Bohrwerkzeugantriebs eintreten kann.

Das Oder-Glied 106 verknüpft beide Stopsignale und schaltet bereits bei einem der Stopsignale den Vorschubregler 108 so, daß dieser über einen Triac 122 die Stromzufuhr zu dem Vorschubantrieb 21 unterbricht und damit eine weitere Belastung verhindert. Insbesondere ist das Oder-Glied 106 als nicht ausschließliches Oder-Glied geschaltet, so daß sowohl bei Übermittlung eines Stopsignals von der Auswerteschaltung 96 oder eines Stopsignals von der Stromauswerteschaltung 116 oder bei Auftreten beider Stopsignale ein Abschalten des Vorschubantriebs 21 erfolgt.

Darüberhinaus wirkt auch noch der Bohrtiefenabschalter 78 auf den Vorschubregler 108 und führt bei Betätigung seines Betätigungselements 76 ebenfalls zu einer Abschaltung des Stroms zum Vorschubantrieb 21.

Sowohl der Vorschubregler 108 als auch der Bohrregler 112 sind jeweils mit einem Soll-Einstellglied 124 bzw. 126 versehen, so daß mit dem Soll-Einstellglied 124 eine gewünschte Vorschubgeschwindigkeit über den Vorschubregler 108 eingestellt werden kann und mit dem Soll-Einstellglied 126 eine bestimmte Soll-Drehzahl des Bohrwerkzeugantriebs 17.

Erfindungsgemäß sind die beiden Soll-Einstellglieder 124 und 126 miteinander in einer vorgebbaren Relation gekoppelt, wobei die Kopplung von der Art des Bohrwerkzeugantriebs 17 und der Art des Vorschubantriebs 21 sowie dem zu bearbeitenden Material abhängt. Durch die Kopplung der beiden Soll-Einstellglieder 124 und 126 besteht die Möglichkeit, die vorteilhafteste Beziehung zwischen der Vorschubgeschwindigkeit und der Drehzahl des Bohrwerkzeugs vorzugeben, so daß die Bedienungsperson lediglich eine Einstellung vornehmen muß, um sowohl die gewünschte Vorschubgeschwindigkeit als auch die gewünschte Drehzahl des Bohrwerkzeugs 19 festzulegen.

Der Vorschubregler 108 arbeitet dann mit dem am Soll-Einstellglied 124 vorgewählten Wert der Vorschubgeschwindigkeit, wenn weder von dem Oder-Glied 106 noch von dem Bohrtiefenabschalter 78 eine Unterbrechung des Vorschubantriebs 21 verlangt wird. Desgleichen stellt der Bohrregler 112 dann die am Soll-Einstellglied 126 gewählte Drehzahl des Bohrwerkzeugantriebs 17 ein, wenn die Stromauswerteschaltung 116 keine Begrenzung auf den zweiten Grenzstrom im Stromkreis des Bohrwerkzeugantriebs 17 verlangt.

Mit dieser Überlastabschalteinrichtung arbeitet die erfindungsgemäße Bohreinrichtung nun so, daß zunächst der Bohrvorgang mit den an den Soll-Einstellgliedern 124 und 126 vorgewählten Werten für die Vorschubgeschwindigkeit und die Drehzahl des Bohrwerkzeugs 19 durchgeführt wird.

Tritt nun aufgrund einer zu großen Vorschubgeschwindigkeit eine zu große Gegenkraft auf das Bohrwerkzeug 19 entgegengesetzt zur Vorschubrichtung 80 auf, so wird zunächst das Betätigungselement 58 des Schalters 56 von der Stellung A in die Stellung B bewegt, was zur Folge hat, daß die Auswerteschaltung 96 nicht mehr über die grüne Leuchtdiode 100 den Normalzustand, sondern über die gelbe Leuchtdiode 102 anzeigt, daß die Bohrkraft nunmehr gerade noch erlaubt ist. Steigt die Gegenkraft auf das Bohrwerkzeug 19 entgegengesetzt zur Vorschubrichtung 80 noch weiter an, so wird das Betätigungselement 58 in die Stellung C verschoben, was zur Folge hat, daß die Auswerteschaltung 96 einmal über die rote Leuchtdiode 104 das Erreichen der nicht mehr erlaubten Bohrkraft anzeigt und zum andern ein Stopsignal an das Oder-Glied 106 gibt, welches über den Vorschubregler den Vorschubantrieb 21 stillsetzt.

In diesem Fall ist, wie bereits bei der Beschreibung des mechanischen Aufbaus dargelegt, das Tellerfederpaket 38 um einen bestimmten Federweg zusammengedrückt und beaufschlagt bei stehendem Vorschubantrieb 21 und somit stehender Zahnstange 24 den Halter 16 und somit letztlich auch das Bohrwerkzeug 19 in Richtung auf das Bohrgut. Die Abschaltung des Vorschubantriebs 21 eröffnet nunmehr dem Bohrwerkzeug 19 die Möglichkeit, durch Weiterarbeiten sich freizuarbeiten, wobei dieses Freiarbeiten unter Beaufschlagung der durch das Tellerfederpaket 38 ausgeübten Kraft erfolgt. Erst wenn die Gegenkraft entgegengesetzt zur Vorschubrichtung 80 nachläßt und sich das Tellerfederpaket 38 wieder entspannt und somit auch wiederum das Betätigungselement 58 des Schalters 56 in die Stellung B gelangt, löscht die Auswerteschaltung 96 das dem Oder- Glied übermittelte Stopsignal und schaltet somit den Vorschubantrieb 21 wieder ein, so daß wieder mit der ursprünglich eingestellten Vorschubgeschwindigkeit weitergearbeitet wird.

Diese Art der Steuerung erlaubt einen Betrieb der erfindungsgemäßen Bohreinrichtung dergestalt, daß bei schwer zu bohrendem Material die Bohreinrichtung ständig im Bereich der maximal zulässigen Bohrkraft arbeitet, wobei bei Überschreiten der Bohrkraft der Vorschubantrieb 21 abgeschaltet und nach Unterschreiten derselben wieder eingeschaltet wird, so daß der Halter 16 ständig schrittweise vorwärtsbewegt wird, das Bohrwerkzeug 19 jedoch durch das Tellerfederpaket 38 stets mit einer Kraft beaufschlagt wird, die um die maximal zugelassene Bohrkraft schwankt.

Die Steuerung des Bohrwerkzeugantriebs 17 arbeitet ferner so, daß bei Auftreten eines zu großen Gegendrehmoments im Bereich des Bohrwerkzeugs 19 und somit einer übermäßigen Stromaufnahme des Bohrwerkzeugantriebs 17 zunächst der Stromsensor 110 feststellt, daß der erste Grenzstrom überschritten ist. Dieser Zustand wird durch die Leuchtdiode 120 der Stromanzeige 118 angezeigt und gleichzeitig wird ein Stopsignal an das Oder-Glied 106 gegeben, was ebenfalls zur Folge hat, daß der Vorschubantrieb 21 vom Vorschubregler 108 abgeschaltet wird. Durch das Abschalten des Vorschubantriebs erfolgt kein weiterer Vorschub des Bohrwerkzeugs 19, so daß das Bohrwerkzeug 19 die Möglichkeit hat, mit dem eingestellten Grenzstrom weiterzuarbeiten und sich dadurch freizuarbeiten, so lange, bis das Gegendrehmoment und folglich auch die Stromaufnahme des Bohrwerkzeugantriebs unter den ersten Grenzstrom absinken, worauf die Stromauswerteschaltung 116 das Stopsignal aufhebt und somit der Vorschubantrieb 21 wieder eingeschaltet wird.

Steigt während des Freiarbeitens der Strom weiter an, so begrenzt nach Erreichen des zweiten Grenzstroms die Stromauswerteschaltung 116, wie bereits beschrieben, den Strom für den Bohrwerkzeugantrieb 17 auf diesen Grenzstrom über den Bohrregler 112.

Die erfindungsgemäße Überlastabschaltung ermöglicht somit ein differenziertes Eingehen auf unterschiedliche Überlastzustände, nämlich einmal auf einen Überlastzustand, bewirkt durch eine zu große Bohrkraft und eine daraus resultierende Gegenkraft entgegengesetzt zur Vorschubrichtung 80, sowie ein andermal auf einen Überlastzustand, bewirkt durch ein Gegendrehmoment auf das Bohrwerkzeug 19 und somit einen zu großen Strom des Bohrwerkzeugantriebs 17. Beide Überlastzustände können einzeln auftreten oder auch zusammen, wobei die erfindungsgemäße Überlastabschalteinrichtung in jedem Fall durch das Abschalten des Vorschubantriebs dem Bohrwerkzeugantrieb 17 die Möglichkeit gibt, durch Weiterarbeiten das Bohrwerkzeug 19 wieder freizuarbeiten, wobei nach dem Freiarbeiten des Bohrwerkzeugs 19 die Überlastabschalteinrichtung selbsttätig wieder den Vorschubantrieb 21 einschaltet und somit den Bohrvorgang fortsetzt. Dies erlaubt beim Bohren von Bohrgut unter Grenzbelastungen einen intermittierenden Vorschubbetrieb, welcher in jedem Zustand eine Überlastung der Bohreinrichtung vermeidet, jedoch in der Lage ist, ständig im Grenzbereich der Belastung den Bohrvorgang durchzuführen.

## Patentansprüche

1. Bohreinrichtung mit einer in einer Vorschubeinrichtung verschieblich gelagerten Halterung für einen ein Bohrwerkzeug antreibenden Bohrwerkzeugantrieb, mit einer Vorschubeinrichtung, umfassend einen Vorschubantrieb zum Verschieben der Halterung, und mit einer Überlastabschalteinrichtung, umfassend einen eine Kraft auf das Bohrwerkzeug entgegengesetzt zur Vorschubrichtung messenden Sensor, wobei die Überlastabschalteinrichtung bei Überschreiten einer vorgebbaren Gegenkraft auf das Bohrwerkzeug entgegengesetzt zur Vorschubrichtung eine Abschaltung des Vorschubantriebs durchführt, **dadurch gekennzeichnet,** daß eine Meßeinrichtung (110) für einen Lastzustand des Bohrwerkzeugantriebs (17) vorgesehen ist, und daß die Überlastabschalteinrichtung (106, 108) so ausgebildet ist, daß sie entweder bei Überschreiten einer vorgebbaren Gegenkraft entgegengesetzt zur Vorschubrichtung (80) oder bei Erreichen eines Grenzlastzustandes des Bohrwerkzeugantriebs (17) den Vorschubantrieb (21) abschaltet, jedoch den Bohrwerkzeugantrieb (17) weiterlaufen läßt.

2. Bohreinrichtung nach Anspruch 1, dadurch gekennzeichnet, daß die Überlastabschalteinrichtung eine eine Ausweichbewegung des Bohrwerkzeugs (19) entgegengesetzt zur Vorschubrichtung (18) erlaubende Auslöseeinrichtung (20) für den Sensor (56) aufweist.

3. Bohreinrichtung nach Anspruch 2, dadurch gekennzeichnet, daß die Auslöseeinrichtung eine Verschiebeführung (20) mit einem stationären (14) und einem gegenüber dieser beweglichen Verschiebeelement (16) umfaßt.

4. Bohreinrichtung nach Anspruch 3, dadurch gekennzeichnet, daß die Verschiebeführung (20) eine Längsführung und das Verschiebeelement (16) ein längs dieser bewegliches Gleitelement ist.

5. Bohreinrichtung nach einem der Ansprüche 2 bis 4, dadurch gekennzeichnet, daß die Auslöseeinrichtung (20) der Ausweichbewegung des Bohrwerkzeugs (19) entgegengesetzt zur Vorschubrichtung (80) mit einem elastischen Kraftspeicher (38) entgegenwirkt.

6. Bohreinrichtung nach Anspruch 5, dadurch gekennzeichnet, daß der elastische Kraftspeicher (38) zur Einstellung einer vorgebbaren Gegenkraft justierbar ist.

7. Bohreinrichtung nach Anspruch 5 oder 6, dadurch gekennzeichnet, daß der elastische Kraftspeicher (38) vorspannbar ist.

8. Bohreinrichtung nach einem der Ansprüche 5 bis 7, dadurch gekennzeichnet, daß der elastische Kraftspeicher (38) einen kraftbeaufschlagten Verschiebeweg der Auslöseeinrichtung (20) zuläßt.

9. Bohreinrichtung nach einem der voranstehenden Ansprüche, dadurch gekennzeichnet, daß der Sensor (56) ein Wegsensor ist.

10. Bohreinrichtung nach Anspruch 9, dadurch gekennzeichnet, daß der Sensor (56) ein mehrstufiger Sensor ist.

11. Bohreinrichtung nach Anspruch 10, dadurch gekennzeichnet, daß der Sensor (56) eine erste Schaltstufe (90) und eine auf diese folgend angeordnete zweite Schaltstufe (92) aufweist.

12. Bohreinrichtung nach Anspruch 11, dadurch gekennzeichnet, daß die Überlastabschalteinrichtung bei Erreichen der ersten Schaltstufe (90) ein Warnsignal abgibt.

13. Bohreinrichtung nach Anspruch 12, dadurch gekennzeichnet, daß die Überlastabschalteinrichtung bei Erreichen der zweiten Schaltstufe (92) die Abschaltung des Vorschubantriebs (21) durchführt.

14. Bohreinrichtung nach einem der voranstehenden Ansprüche, dadurch gekennzeichnet, daß die Meßeinrichtung (110) für den Lastzustand des Bohrwerkzeugantriebs (17) dessen Stromaufnahme erfaßt.

15. Bohreinrichtung nach Anspruch 14, dadurch gekennzeichnet, daß die Überlastabschalteinrichtung das Überschreiten eines ersten vorgebbaren Grenzstroms als Grenzlastzustand wertet und den Vorschubantrieb (21) abschaltet.

16. Bohreinrichtung nach Anspruch 15, dadurch gekennzeichnet, daß die Überlastabschalteinrichtung eine Stromregelung (116, 126) für den Bohrwerkzeugantrieb (17) umfaßt und dessen Strom auf einen zweiten, über dem ersten Grenzstrom liegenden Wert mit der Stromregelung (116, 126) begrenzt.

17. Bohreinrichtung nach Anspruch 15 oder 16, dadurch gekennzeichnet, daß die Überlastabschalteinrichtung bei Überschreiten des ersten Grenzstroms ein Warnsignal abgibt.

18. Bohreinrichtung nach einem der voranstehenden Ansprüche, dadurch gekennzeichnet, daß die Abschaltung des Vorschubantriebs (21) nach Unterschreiten des vorgebbaren Gegenkraft oder Unterschreiten des Grenzlastzustandes selbsttätig aufgehoben und der Vorschubantrieb (21) wieder eingeschaltet wird.

19. Bohreinrichtung nach einem der Ansprüche 5 bis 18, dadurch gekennzeichnet, daß der elastische Kraftspeicher (38) so einstellbar ist, daß die vorgebbare Gegenkraft erst nach Durchlaufen eines Verschiebewegstücks überschritten ist.

20. Bohreinrichtung nach einem der voranstehenden Ansprüche, dadurch gekennzeichnet, daß die Vorschubeinrichtung mit einer Bohrtiefenabschaltung (74, 78) versehen ist, welche bei Erreichen einer vorgebbaren Bohrtiefe den Vorschubantrieb (21) abschaltet.

21. Bohreinrichtung nach Anspruch 20, dadurch gekennzeichnet, daß die Bohrtiefenabschaltung (74, 78) getrennt von der Auslöseeinrichtung (20) angeordnet ist.

FIG.1

FIG. 2

FIG. 3